# EUROPEAN PATENT SPECIFICATION

(11) **EP 3 518 191 B1**
(45) Date of publication and mention of the grant of the patent: **01.10.2025**
(21) Application number: 18215245.4
(22) Date of filing: 21.12.2018
(51) Int. Cl.: G07F 19/00, G07D 7/206

(54) **RAPID LANDMARK-BASED MEDIA RECOGNITION**
SCHNELLE LANDMARKENBASIERTE MEDIENERKENNUNG
RECONNAISSANCE RAPIDE DE MÉDIA À BASE DE POINT DE REPÈRE

(30) Priority: 30.01.2018 US 201815883256
(43) Date of publication of application: 31.07.2019
(73) Proprietor: NCR Voyix Corporation, Atlanta, GA 30308-1007 (US)
(72) Inventor: MIAO, Yun-Qian, Atlanta, GA Georgia 30308-1007 (US); ROSS, Gary Alexander, Atlanta, GA Georgia 30308-1007 (US)
(74) Representative: Secerna LLP

(56) References cited:
- US-A1- 2009 152 357
- US-A1- 2012 235 785
- US-A1- 2014 279 516
- US-A1- 2017 132 866

## Description

Media input devices, such as currency and check acceptors, passport scanners, and the like are becoming more common at self-service kiosk terminals. Self-service kiosk terminals include automated teller machines, self-service checkout terminals, immigration entry terminals at airports and rail stations, and others. Customer satisfaction is key to solutions including such media input devices. To achieve customer satisfaction, not only is accuracy essential, but also quick throughput.

Media input devices, once an image has been obtained, include two sequential steps. These steps include media class recognition and authenticity validation. The recognition step is applied first to determine which class an item belongs to, such as denomination, print version, and insert direction. The validation step follows to assess the item's authenticity by examining security features of that specific class. Document US 2009/152357 A1 discloses a classification system with a tree-like structure, using Principle Component Analysis to create the sub-classes. Document US 2017/132866 A1 discloses another tree-like structure using Pairwise Comparator Nodal Network for creating the classification scheme.

Various embodiments herein include method and device according to the appended claims for rapid landmark-based media recognition. One such embodiment according to claim 1 in the form of a method includes receiving a document image comprising pixels and processing to document image to identify a document type based first on document template classification groups and then document classification templates associated with a selected document template classification group. A document type classification group is selected based on more complex processing of the pixels of the document image to identify landmarks present therein, other properties of an image or a presented document (e.g., determined material upon which the document is printed such as paper, plastic, and other possible materials) and other methods based on other factors and combinations thereof. Such embodiments select a document template classification group based on the landmarks identified within the document image and compares the document image to document templates of the selected document template classification group to classify a document type of the received image. Some embodiments of the method further include forwarding the document image and the document type classification to a document type validation process.

Another method embodiment includes storing a plurality of document template classification groups each including data defining landmarks present within a respective group of document classification templates that are applied to classify a received document image as a particular document type to select a document validation process to validate a presented document of the received document image. This method also includes receiving a document image comprising pixels, processing the pixels of the document image to identify landmarks present therein, and selecting a document template classification group based on the landmarks identified within the document image.

A further embodiment is in the form of a device according to claim 9. The device includes an imaging device, a data processor, and a memory storing instructions executable by the data processor to perform data processing activities. The data processing activities includes receiving a document image comprising pixels from the imaging device and processing the pixels of the document image to identify landmarks present therein. The data processing activities includes selecting a document template classification group based on the landmarks identified within the document image.

These and other embodiments are described in greater detail in the drawings, in which:
FIG. 1 is a logical block diagram of a terminal, according to an example embodiment.
FIG. 2 is a logical flow diagram of a method, according to an example embodiment.
FIG. 3 is a block flow diagram of a method, according to an example embodiment.
FIG. 4 is a block diagram of a computing device, according to an example embodiment.

mentioned above, media input devices, such as currency and check acceptors, passport scanners, and the like are becoming more common at self-service kiosk terminals. Self-service kiosk terminals include automated teller machines, self-service checkout terminals, immigration entry terminals at airports and rail stations, and others. Customer satisfaction is key to solutions including such media input devices. To achieve customer satisfaction, not only is accuracy essential, but also quick throughput.

Media input devices, once an image has been obtained, include two sequential steps. These steps include media class recognition and authenticity validation. The recognition step is applied first to determine which class an item belongs to, such as denomination, print version, and insert direction. The validation step follows to assess the item's authenticity by examining security features of that specific class.

Great success has been achieved through implementation of media input device recognition with very high recognition accuracies. However, the recognition routine running-time is a bottleneck confounding high-throughput. This confound is due to the exhaustive document template comparison strategy that compares media images received as input with all templates in a collection and then selecting the best match. This processing, while logically correct, is inevitably inefficient. The various embodiments herein focus on the recognition step to advance its computational efficiency to increase throughput while not diminishing accuracy.

Instead of linearly scanning all possible templates to recognize a media item, some embodiments take a novel approach to accelerate the recognition process by re-organizing document templates. This re-organizing, in some embodiments, includes defining an anchor point descriptor over documents templates that characterizes one or more meta features, such as cross-template similarities, the media size (e.g., length and width), and the like. The reorganizing may further include clustering the descriptor and selecting a complete set of representatives as 'Landmarks.' Document templates may then be grouped according to their similarity to those landmarks. Landmarks may be single document properties but may also be combinations of several properties. A landmark may be a property identified based on image processing, such as determined material. To this end, in recognizing an item on-the-fly, the document template search space is limited to a small group of templates affiliated with a Landmark (LM), which is just a fraction of the whole collection of document templates.

An anchor descriptor, as mentioned, is defined over a document template collection to characterize a meta-feature, such as cross-template similarity, the media size, etc. For example, for US dollar notes different denominations within one series have shown clustering phenomena in a cross-template similarity matrix. For British pounds, defining note size as an anchor descriptor may be a good choice while with other document types may have other similar features may individually or in combination provide a highly-indicative anchor descriptor.

From anchor descriptors of document templates, clustering of the document templates may then be performed according their anchor value or values and anchors or combinations thereof may be declared as landmarks that are indicative of a cluster of document templates.

Each document template of a cluster is then assigned into a group according to its similarity to the landmarks. In some instances, a template may not fit exactly or solely into a single document template classification group. In such instances, the document template may be linked to all possible groups to which it may fit. In such embodiments, groups are allowed to have overlap on their member document templates. This is key in some embodiments to avoid misleading in recognition.

Once document template classification groups have been formed, the groups are then added into a document template classification model. The document template classification model may then be deployed to devices or processes where the document classification is performed, such as media input devices (e.g., document validation modules, currency bill validators, passport scanners, ATMs, etc.). However, within the document template model and within document template classification groups, templates groups and templates therein may be ordered based on likelihood of occurrence of a document-type or document-types within document template classification groups.

For example, some currency notes or other documents are much more common than others in actual circulation or use. For example, in United States the $20 currency note of a particular series takes nearly half of all US dollars in Automated Teller Machine (ATM) transactions. Another example is the British Pound, where the region bias can be asserted, e.g., in Scotland Scottish currency notes are more common than currency notes issued by Northern Ireland banks. With this popularity or frequency information, further sort the grouped templates by the frequency at which they are presented and increasing the likelihood that a document is classified with a document classification template group earlier in the process.

Once a document classification template group is identified, more detailed matching is then performed just as in prior efforts, although limited to just the identified document classification template group.

Combined with a document template classification early stop, or selection of a document template classification group, mechanism, embodiments herein assure a boost to recognition speed, while not imposing any change on the recognition function. Experiments on US dollar and British pound currency notes affirmed the advantages of these embodiments showing identical accuracy but doing so two to ten times faster. This savings in recognition time is beneficial to allow greater throughput of currency notes, checks, and other documents, depending on the terminal or other kiosk-type of a particular embodiment and reclaims processing time and delay in customer experiences for validation functions to more thoroughly ensure items presented are in fact valid and otherwise non-fraudulent.

These and other embodiments are described below with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

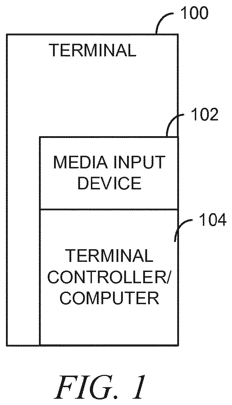

FIG. 1 is a logical block diagram of a terminal 100, according to an example embodiment. The terminal 100 is a simple example of a terminal on which some embodiments may be implemented. The terminal may be an ATM, a self-service checkout, an immigration terminal at an airport, an airline check-in kiosk, and the like.

The terminal 100 includes a controller or computer 104 that controls operation thereof. The terminal 100 also includes a media input device 102 which can be of various types, such as a currency note acceptor/validator module, a passport scanner, or other imaging device that captures images of presented documents and either processes those images thereon, presents them to a process that executes on the terminal controller/computer 104, or over a computer network to be processed remotely by a web service or other process. In some embodiments, a document template classification model is deployed to the device or process that performs the image processing.

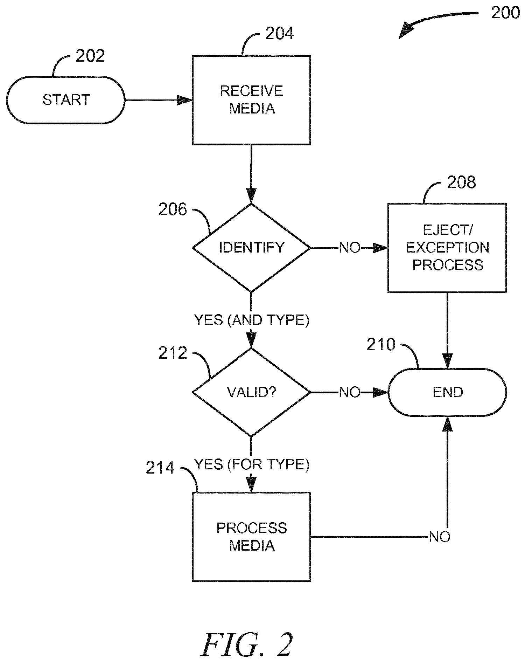

FIG. 2 is a logical flow diagram of a method 200, according to an example embodiment. The method 200 is an example of a method that utilizes a document template classification model. The method 200 may be performed, in some embodiments on a media input device 102 or a terminal controller/computer 104 of FIG. 1, a networked server, or on another device.

The method 200 starts 202 by receiving 204 media, such as an image of a document presented to a media input device (e.g., currency note validation device, document imager/scanner, etc.). The method 200 then attempts to identify the media, such as by comparing the received media with a document template classification model, as discussed above, and then document classification templates associated with an identified document classification template group. When an identification 206 cannot be made, the method 200 may eject or reject a presented item from which the received 204 media was generated (e.g., currency note, passport, check, etc.), perform exception processing 208, if any, and end 210 the method 200 execution. However, if the received 204 media is identified 206, the method 200 them performs validation 212 on the received 204 media. If not validated 212, the method 200 may, in some embodiments, eject or reject the presented item from which the received 204 media was generated (e.g., currency note, passport, check, etc.), perform exception processing 208, if any, and end 210 or just simply end 210. If the received 204 media is validated 212, the media may then be processed 214 (e.g., adding currency to an ATM or self-service checkout deposit or payment transaction) and the method 200 may then end 210.

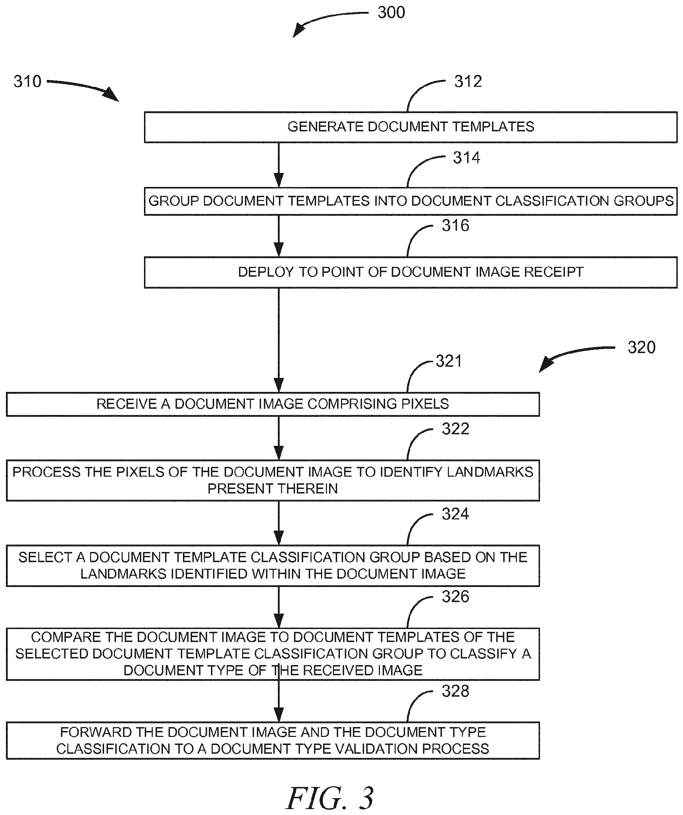

FIG. 3 is a block flow diagram of a method 300, according to an example embodiment. The method 300 includes two portions 310, 320. The first portion 310 is performed to generate a document template classification model, as discussed above. The second portion 320 is performed to classify received media, or document, images based on the document template classification model. To select a selected group of document templates from which to classify the received media. The second portion 320 of the method 300 may be performed many times for each time the first portion 310 is performed.

The first portion 310 of the method 300 includes generating document templates 312, grouping 314 document templates into document classification groups, and deploying 316 those document template classification groupings, in the form of a document template classification model, to a data processing location where document images are received for processing.

The second portion 320 of the method 300 includes receiving 321 a document image comprising pixels and processing 322 the pixels of the document image to identify landmarks present therein. The second portion 320 further includes selecting 324 a document template classification group, of the deployed 316 document template classification model, based on the landmarks identified within the document image and comparing 326 the document image to document templates of the selected document template classification group to classify a document type of the received 321 image. The second portion 320 of the method 300 may then forward 328 the document image and the document type classification to a document type validation process.

In some embodiments of the method 300, the received 321 document image is of a negotiable document such as a currency note or a check. The document image may be received from a document validation module of a self-service terminal. The self-service terminal may be an ATM, self-service checkout terminal, or other terminal. In some other embodiments, the document image may be received 321 from a mobile device such as a smartphone, tablet, laptop computer, or other similar device.

In some embodiments, a document template classification group is representative of a plurality of document templates, each document template classification group including at least one landmark, each landmark defined by properties of pixels, relations between pixel properties, and classification values that are utilized to perform the selection of the document classification group.

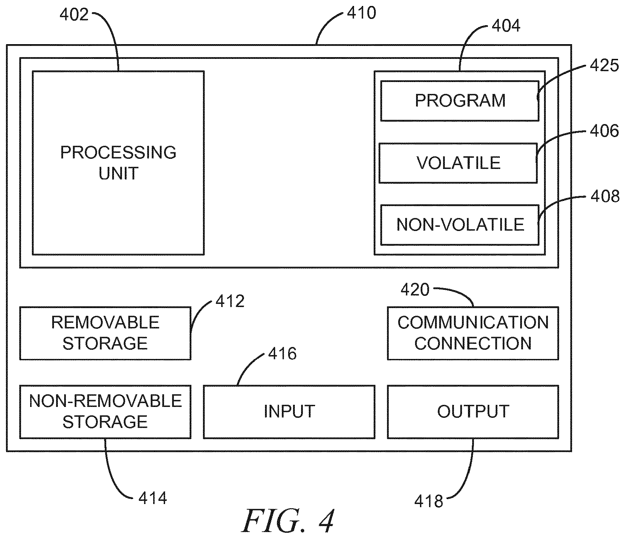

FIG. 4 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 410, may include a processing unit 402, memory 404, removable storage 412, and non-removable storage 414. Although the example computing device is illustrated and described as computer 410, the computing device may be in different forms in different embodiments. For example, the computing device may instead be a smartphone, a tablet, smartwatch, or other computing device including the same or similar elements as illustrated and described with regard to FIG. 4. Devices such as smartphones, tablets, and smartwatches are generally collectively referred to as mobile devices. Further, although the various data storage elements are illustrated as part of the computer 410, the storage may also or alternatively include cloud-based storage accessible via a network, such as the Internet. Regardless of the type of computing device of the particular embodiment, the respective computing device may be deployed, implemented, or otherwise utilized as, or in conjunction with, a terminal as described elsewhere above.

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) and electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 410 may include or have access to a computing environment that includes input 416, output 418, and a communication connection 420. The input 416 may include one or more of a media input device 102 of FIG. 1 (e.g., currency acceptor, check acceptor, passport scanner), a touchscreen, touchpad, mouse, keyboard, camera, one or more device-specific buttons, one or more sensors integrated within or coupled via wired or wireless data connections to the computer 410, and other input devices. The computer 410 may operate in a networked environment using a communication connection 420 to connect to one or more remote computers, such as database servers, web servers, and other computing device. An example remote computer may include a personal computer (PC), server, router, network PC, a peer device or other common network node, or the like. The communication connection 420 may be a network interface device such as one or both of an Ethernet card and a wireless card or circuit that may be connected to a network. The network may include one or more of a Local Area Network (LAN), a Wide Area Network (WAN), the Internet, and other networks. In some embodiments, the communication connection 420 may also or alternatively include a transceiver device, such as a BLUETOOTH^{®} device that enables the computer 410 to wirelessly receive data from and transmit data to other BLUETOOTH^{®} devices.

Computer-readable instructions stored on a computer-readable medium are executable by the processing unit 402 of the computer 410. A hard drive (magnetic disk or solid state), CD-ROM, and RAM are some examples of articles including a non-transitory computer-readable medium. For example, various computer programs 425 or apps, such as one or more applications and modules implementing one or more of the methods illustrated and described herein or an app or application that executes on a mobile device or is accessible via a web browser, may be stored on a non-transitory computer-readable medium.

It will be readily understood to those skilled in the art that various other changes in the details, material, and arrangements of the parts and method stages which have been described and illustrated in order to explain the nature of the inventive subject matter may be made within the scope of the inventive subject matter as expressed in the subjoined claims.

## Claims

1. A method comprising:
receiving (321) a document image comprising pixels;
processing (322) the pixels of the document image to identify landmarks present therein, a landmark including one or a combination of document properties;
selecting (324) a document template classification group based on the landmarks identified within the document image, each document template classification group formed by:
defining anchor point descriptors over a document template collection characterizing meta features;
clustering the anchor point descriptors;
selecting a set of representative anchor point descriptors, the representative anchor point descriptors being the landmarks; and
grouping the document templates based on the landmarks;
comparing (326) the document image to document templates of the selected document template classification group to classify a document type of the received image; and
forwarding (328) the document image and the document type classification to a document type validation process.

2. The method of claim 1, wherein the document image is of a negotiable document.

3. The method of claim 2, wherein the negotiable document is a currency note.

4. The method of any of the preceding claims, wherein the document image is received from a document validation module device.

5. The method of claim 4, wherein the document validation module device is a component of a self-service terminal.

6. The method of claim 5, wherein the self-service terminal is an automated teller machine.

7. The method of any of the preceding claims, wherein the document image is received from an imaging device of a mobile device on which the method is executed.

8. The method of any of the preceding claims, wherein a document template classification group is representative of a plurality of document templates, each document template classification group including at least one landmark, each landmark defined by properties of pixels, relations between pixel properties, and classification values that are utilized to perform the selection of the document template classification group.

9. A device comprising:
an imaging device;
a data processor (402);
a memory (404) storing instructions executable by the data processor to perform data processing activities comprising:
receiving (321) a document image comprising pixels from the imaging device;
processing (322) the pixels of the document image to identify landmarks present therein, a landmark including one or a combination of document properties;
selecting (324) a document template classification group based on the landmarks identified within the document image, each document template classification group formed by:
defining anchor point descriptors over a document template collection characterizing meta features;
clustering the anchor point descriptors;
selecting a set of representative anchor point descriptors, the representative anchor point descriptors being the landmarks; and
grouping the document templates based on the landmarks;
comparing (326) the document image to document templates of the selected document template classification group to classify a document type of the received image; and
forwarding (328) the document image and the document type classification to a document type validation process.

10. The device of claim 9, further comprising:
a network interface device; and
wherein processing the pixels of the document image and selecting a document template classification group include transmitting the document image via the network interface device for the processing and selecting to be performed remotely and receiving the selection via the network interface device in response thereto.

## Patentansprüche

1. Verfahren, umfassend:
Empfangen (321) eines Dokumentbilds, das Pixel umfasst;
Verarbeiten (322) der Pixel des Dokumentbilds, um darin vorhandene Landmarken zu identifizieren, wobei eine Landmarke eine oder eine Kombination von Dokumenteigenschaften umfasst;
Auswählen (324) einer Dokumentvorlagen-Klassifizierungsgruppe basierend auf den innerhalb des Dokumentbilds identifizierten Landmarken, wobei jede Dokumentvorlagen-Klassifizierungsgruppe gebildet wird durch:
Definieren von Ankerpunktdeskriptoren über eine Dokumentvorlagensammlung, die Metamerkmale charakterisieren; Clustern der Ankerpunktdeskriptoren;
Auswählen eines Satzes von repräsentativen Ankerpunktdeskriptoren, wobei die repräsentativen Ankerpunktdeskriptoren die Landmarken sind; und
Gruppieren der Dokumentvorlagen basierend auf den Landmarken; Vergleichen (326) des Dokumentbilds mit Dokumentvorlagen der ausgewählten Dokumentvorlagen-Klassifizierungsgruppe, um einen Dokumenttyp des empfangenen Bilds zu klassifizieren; und
Weiterleiten (328) des Dokumentbilds und der Dokumenttyp-Klassifizierung an einen Dokumenttyp-Validierungsprozess.

2. Verfahren nach Anspruch 1, wobei das Dokumentbild ein umlauffähiges Dokument ist.

3. Verfahren nach Anspruch 2, wobei das umlauffähige Dokument eine Banknote ist.

4. Verfahren nach einem der vorhergehenden Ansprüche, wobei das Dokumentbild von einer Dokumentvalidierungsmodulvorrichtung empfangen wird.

5. Verfahren nach Anspruch 4, wobei die Dokumentvalidierungsmodulvorrichtung eine Komponente eines Selbstbedienungsterminals ist.

6. Verfahren nach Anspruch 5, wobei das Selbstbedienungsterminal ein Geldausgabeautomat ist.

7. Verfahren nach einem der vorhergehenden Ansprüche, wobei das Dokumentbild von einer Abbildungsvorrichtung einer mobilen Vorrichtung empfangen wird, auf der das Verfahren ausgeführt wird.

8. Verfahren nach einem der vorhergehenden Ansprüche, wobei eine Dokumentvorlagen-Klassifizierungsgruppe repräsentativ für eine Vielzahl von Dokumentvorlagen ist, wobei jede Dokumentvorlagen-Klassifizierungsgruppe mindestens eine Landmarke umfasst, wobei jede Landmarke durch Eigenschaften von Pixeln, Beziehungen zwischen Pixeleigenschaften und Klassifizierungswerte definiert ist, die verwendet werden, um die Auswahl der Dokumentvorlagen-Klassifizierungsgruppe durchzuführen.

9. Vorrichtung, umfassend:
eine Abbildungsvorrichtung;
einen Datenprozessor (402);
einen Speicher (404), der Anweisungen speichert, die durch den Datenprozessor ausführbar sind, um Datenverarbeitungsaktivitäten durchzuführen, die Folgendes umfassen:
Empfangen (321) eines Dokumentbilds, das Pixel umfasst, von der Abbildungsvorrichtung;
Verarbeiten (322) der Pixel des Dokumentbilds, um darin vorhandene Landmarken zu identifizieren, wobei eine Landmarke eine oder eine Kombination von Dokumenteigenschaften umfasst;
Auswählen (324) einer Dokumentvorlagen-Klassifizierungsgruppe basierend auf den innerhalb des Dokumentbilds identifizierten Landmarken, wobei jede Dokumentvorlagen-Klassifizierungsgruppe gebildet wird durch:
Definieren von Ankerpunktdeskriptoren über eine Dokumentvorlagensammlung, die Metamerkmale charakterisieren;
Clustern der Ankerpunktdeskriptoren;
Auswählen eines Satzes von repräsentativen Ankerpunktdeskriptoren, wobei die repräsentativen Ankerpunktdeskriptoren die Landmarken sind; und
Gruppieren der Dokumentvorlagen basierend auf den Landmarken;
Vergleichen (326) des Dokumentbilds mit Dokumentvorlagen der ausgewählten Dokumentvorlagen-Klassifizierungsgruppe, um einen Dokumenttyp des empfangenen Bilds zu klassifizieren; und
Weiterleiten (328) des Dokumentbilds und der Dokumenttyp-Klassifizierung an einen Dokumenttyp-Validierungsprozess.

10. Vorrichtung nach Anspruch 9, ferner umfassend:
eine Netzwerkschnittstellenvorrichtung; und
wobei das Verarbeiten der Pixel des Dokumentbilds und das Auswählen einer Dokumentvorlagen-Klassifizierungsgruppe ein Übertragen des Dokumentbilds über die
Netzwerkschnittstellenvorrichtung, damit das Verarbeiten und das Auswählen aus der Ferne durchgeführt werden, und ein Empfangen der Auswahl über die Netzwerkschnittstellenvorrichtung als Reaktion darauf umfassen.

## Revendications

1. Procédé comprenant :
la réception (321) d'une image de document comprenant des pixels ;
le traitement (322) des pixels de l'image de document pour identifier des points de repère présents dans celle-ci, un point de repère comprenant une propriété de document ou une combinaison de propriétés de document ;
la sélection (324) d'un groupe de classification de modèles de documents sur la base des repères identifiés dans l'image de document, chaque groupe de classification de modèles de documents étant formé par :
la définition de descripteurs de point d'ancrage sur une collection de modèles de documents caractérisant des méta-caractéristiques ;
le regroupement des descripteurs de points d'ancrage ;
la sélection d'un ensemble de descripteurs de points d'ancrage représentatifs, les descripteurs de points d'ancrage représentatifs étant les repères ; et
le regroupement des modèles de documents sur la base des points de repère ;
la comparaison (326) de l'image de document aux modèles de document du groupe de classification de modèles de document sélectionné pour classifier un type de document de l'image reçue ; et
l'envoi (328) de l'image de document et de la classification de type de document à un processus de validation de type de document.

2. Procédé selon la revendication 1, dans lequel l'image de document est un document négociable.

3. Procédé selon la revendication 2, dans lequel le document négociable est un billet de banque.

4. Procédé selon l'une quelconque des revendications précédentes, dans lequel l'image de document est reçue d'un dispositif de module de validation de document.

5. Procédé selon la revendication 4, dans lequel le dispositif de module de validation de document est un composant d'un terminal en libre-service.

6. Procédé selon la revendication 5, dans lequel le terminal libre-service est un guichet automatique bancaire.

7. Procédé selon l'une quelconque des revendications précédentes, dans lequel l'image de document est reçue d'un dispositif d'imagerie d'un dispositif mobile sur lequel le procédé est exécuté.

8. Procédé selon l'une quelconque des revendications précédentes, dans lequel un groupe de classification de modèles de documents est représentatif d'une pluralité de modèles de documents, chaque groupe de classification de modèles de documents comprenant l'au moins un repère, chaque repère étant défini par des propriétés de pixels, des relations entre des propriétés de pixels et des valeurs de classification qui sont utilisées pour effectuer la sélection du groupe de classification de modèles de documents.

9. Dispositif comprenant :
un dispositif d'imagerie ;
un processeur de données (402) ;
une mémoire (404) stockant des instructions exécutables par le processeur de données pour réaliser des activités de traitement de données comprenant :
la réception (321) d'une image de document comprenant des pixels à partir du dispositif d'imagerie ;
le traitement (322) des pixels de l'image de document pour identifier des points de repère présents dans celle-ci, un point de repère comprenant une propriété de document ou une combinaison de propriétés de document ;
la sélection (324) d'un groupe de classification de modèles de documents sur la base des repères identifiés dans l'image de document, chaque groupe de classification de modèles de documents étant formé par :
la définition de descripteurs de point d'ancrage sur une collection de modèles de documents caractérisant des méta-caractéristiques ;
le regroupement des descripteurs de points d'ancrage ;
la sélection d'un ensemble de descripteurs de points d'ancrage représentatifs, les descripteurs de points d'ancrage représentatifs étant les repères ; et
le regroupement des modèles de documents sur la base des points de repère ;
la comparaison (326) de l'image de document aux modèles de document du groupe de classification de modèles de document sélectionné pour classifier un type de document de l'image reçue ; et
l'envoi (328) de l'image de document et de la classification de type de document à un processus de validation de type de document.

10. Dispositif selon la revendication 9, comprenant en outre :
un dispositif d'interface réseau ; et
dans lequel le traitement des pixels de l'image de document et la sélection d'un groupe de classification de modèle de document comprennent la transmission de l'image de document via le dispositif d'interface de réseau pour le traitement et
la sélection à effectuer à distance et la réception de la sélection via le dispositif d'interface de réseau en réponse à cela.
